Europäisches Patentamt

(19) **European Patent Office**

Office européen des brevets

(11) Publication number: **0 103 442**
**B1**

(12) **EUROPEAN PATENT SPECIFICATION**

(45) Date of publication of patent specification: **12.11.86**

(51) Int. Cl.⁴: **C 03 C 13/00,** C 03 C 13/04, C 03 C 3/093

(21) Application number: **83305067.7**

(22) Date of filing: **01.09.83**

(54) **Oxide glass compositions for use in optical fibres.**

(30) Priority: **10.09.82 GB 8225838**
**23.11.82 GB 8233429**

(43) Date of publication of application:
**21.03.84 Bulletin 84/12**

(45) Publication of the grant of the patent:
**12.11.86 Bulletin 86/46**

(84) Designated Contracting States:
**AT BE CH DE FR GB IT LI LU NL SE**

(56) References cited:
**FR-A-2 438 018**

**CHEMICAL ABSTRACTS, vol. 95, 1981, page 273, no. 11463r, Columbus, Ohio, USA**

**CHEMICAL ABSTRACTS, vol. 98, no. 2, 1983, page 177, no. 7454h, Columbus, Ohio, USA**

**CHEMICAL ABSTRACTS, vol. 96, no. 10, March 1982, page 292, no. 73411b, Columbus, Ohio, USA Y. IKEDA et al.: "Improvement of water resistance of glasses for compound glass fiber waveguides"**

(73) Proprietor: **BRITISH TELECOMMUNICATIONS**
**2-12 Gresham Street**
**London EC2V 7AG (GB)**

(72) Inventor: **Beales, Keith John**
**8 Stella Maris Hadleigh Road**
**Sproughton Ipswich Suffolk (GB)**
Inventor: **Partington, Sally**
**Plot 32 Badgers Mount Outwood Common Road**
**Billericay Essex (GB)**
Inventor: **Smith, Dennis George**
**10 Prittlewell Close**
**Ipswich Suffolk (GB)**
Inventor: **France, Paul William**
**Little Cottage Newbourne**
**Woodbridge Suffolk (GB)**

(74) Representative: **Jewess, Michael et al**
**British Telecom Intellectual Property Unit Room 1304 151 Gower Street**
**London WC1E 6BA (GB)**

Courier Press, Leamington Spa, England.

## Description

This invention relates to oxide glass compositions of the type which can be used for optical fibres, i.e. fibres comprising a core and a cladding, and in particular for the cladding of such fibres.

A variety of processes for preparing optical fibres is known. One of the simplest involves the so-called "double-crucible" technique, in which glass melts are drawn together out of the inner and outer annuli of a crucible, and solidified together. In order that such a technique should be of industrial applicability, it is essential that the compositions of core and cladding glasses should be compatible, e.g. of similar melting characteristics; otherwise, for example, a fibre is obtained in which the diameters of core and cladding are non-uniform. The core and cladding compositions must nevertheless be different, since it is essential that the cladding glass should have a lower refractive index than the core glass. Other aims are low loss in the core glass and high durability in the cladding glass.

The glass compositions used for optical fibres, whether for core or cladding, generally comprise a mixture of oxides. The compositions are generally based on alkali metal aluminosilicates or borosilicates. It is well known that the properties of such glasses can be modified by adding one or more further oxide components, and various proposals have been made, with the intention of reducing the loss of glass fibre cores or improving the durability of glass fibre claddings.

It is generally the case that oxides added to a cladding glass composition in order to improve its durability (but which might impair the loss characteristics of the core glass, and therefore are not added to the latter) cause a reduction in expansivity and an increase in the glass transition temperature (Tg). It is important, however, that neither of these characteristics should be changed so much that compatibility between core and the cladding glasses is lost; in particular, very durable glass compositions can be made but which have such a high Tg that they are difficult to use in combination with a conventional core glass composition in the "double-crucible" technique, and may indeed melt at such a high temperature that they are impossible to used per se, in conventional apparatus. Examples of existing proposals for the addition of components to glass compositions include the addition of Zr (as $ZrO_2$, i.e. in the oxide form in which all elements are used in this field) for an alkali borosilicate glass, to improve durability; see Mitra et al., Indian Ceramics, April 1972, 7—10. The preparation of Al-Zr-Si glasses, from the metal alkoxides, to give durable products, is described by Makishima et al., Journal of Non-Crystalline Solids 42 (1980) 545—552. A similar system is described by Das, J. Amer. Ceram. Soc. 64 (1981) 193. None of these disclosures relate to the particular field of fibre optics.

Shibata et al., Journal of Non-Crystalline Solids 43 (1981) 79—90, disclose the addition of Al and B in alkali silicate glasses, for drawing into optical fibres. Five-component oxide glasses, i.e. Na/K-Ca-Al-B-Si, are disclosed. The Ca content is either at least 5.8 mole% or very low (0.2 mole%); in the latter case, for a Pyrex glass, the Si content is very high (83.6 mole%).

A recent paper by Ikeda et al. discloses the preparation of sodium borosilicate cladding glasses doped with one or more oxides of Mg, Al, Ca, Ti, Zn, Zr and Ba. The general disclosure suggests that up to three dopants are used in combination, but in fact the highest number of dopants used is two. The amounts of dopants used are unclear in most cases. A Na-Zn-Al-B-Si composition is found to provide cladding glasses of optical fibres, with high water-resistance.

GB—A—2074150 discloses a step-type optical fibre in which the core glass is an alkali metal borosilicate containing 8—17% by weight $ZrO_2$ and 30—45% by weight BaO. Cladding glasses disclosed for use with such core compositions contain, for example, 2% by weight $Li_2O$, 14% by weight $Na_2O$, 4% by weight $K_2O$, 2% by weight MgO, 7% by weight ZnO and 3% by weight $Al_2O_3$, or 0, 15, 0, 0, 8 and 15% by weight of the same components.

JP—A—80-154340 discloses alkali metal borosilicate core and cladding glasses, the former containing BaO and the latter, at least in the Examples, at least 5% by weight $Al_2O_3$ as well as, in one instance, 2% by weight ZnO. In all the Examples, a mixture of Na, Li and K is used as the alkali metal component.

JP—A—79-148812 again relates to alkali metal borosilicate core glasses containing BaO. The exemplified cladding glasses contain CaO, a high level of $SiO_2$, a low level of $B_2O_3$ and a variety of other oxides. The use of a large number of oxides is intrinsically impractical, increasing the potential of reaching undesirable impurity levels and making production more complicated. In this particular case, the many oxides appear to have been used to give a very low refractive index to the cladding glass, by comparison with the core glass. The cladding glasses appear to be quite refractory.

The object of GB—A—2034300 appears, once again, to prepare a cladding glass composition which is very durable. To this end, the disclosed compositions contain Na, B, Si, Al and Zn oxides at least, and often further oxides ($TiO_2$, $ZrO_2$, CaO, BaO or MgO) are added. Usually, the Al content is quite high and/or the B content is quite low, and these factors contribute to the production of refractory glasses. EP—A—0018109 discloses alkali metal borosilicate cladding glasses additionally containing an alkaline earth metal oxide. $Al_2O_3$ may also be present. Again, the B content is usually quite low.

US—A—4264131 discloses optical fibres, the core comprising $SiO_2$, $Al_2O_3$ and an alkali metal oxide (and preferably also CaO, MgO and $B_2O_3$), and a cladding of $SiO_2$, $Al_2O_3$, an alkali metal and one or more of ZnO, ZrO$_2$ and TiO$_2$ (and preferably also CaO, MgO and B$_2$O$_3$). This specification gives a careful analysis of the importance of the various components in core and cladding glasses for optical fibres. For example, Al, Ca, Mg, Zn, Zr and Ti are all said to be effective to increase water-resistance or weathering-resistance. The preferred maximum contents of these elements' oxides are, respectively, 8, 5, 3, 3, 3 and 3% by weight. ZnO, ZrO$_2$ and TiO$_2$ are considered of equivalent value in increasing water-resistance. It is also stated that the B$_2$O$_3$ content should not exceed 15% by weight, in order that the refractive index of the cladding glass should not be too high. Various specific examples are given; none of the cladding glasses contains less than two alkali metal components, and there is very considerable variety in the exemplified oxide components.

The core glasses disclosed in EP—A—0018109, and also those in the more recent EP—A—0081928, are generally sodium borosilicates of considerable utility, in that they exhibit low loss. The cladding glasses disclosed in those specifications are of course compatible with the core glasses, but it would be desirable to increase the durability of compatible claddings. The variety of compositions disclosed in the art is of little utility in seeking a solution to this problem, since the known compositions tend to be highly refractory, making them difficult to melt and therefore difficult to use in simple double-crucible techniques. A further problem arises in regard to compatibility, since many of the known cladding glasses would be unsuitable for use with the lowest loss core glasses, primarily because the former have considerably different alkali metal, B and Si contents. For example, there is the potential disadvantage of migration between cladding and core when the former uses a mixture of alkali metals and the latter only sodium, even if the respective compositions have essentially similar alkali metal borosilicate compositions. It is apparently difficult to modify the cladding glass composition of compatible cores and claddings, in order to achieve greater durability for the cladding, without also changing its refractive index and/or Tg to an undesirable extent.

According to the present invention, an oxide glass composition consists of the following components:

| | |
|---|---|
| Na$_2$O | 17 to 21 mole % |
| B$_2$O$_3$ | 14 to 20 mole % |
| Al$_2$O$_3$ | 1 to 3 mole % |
| MgO | 1 to 3 mole % |
| ZnO | 1 to 3 mole % |
| SiO$_2$ | 47 to 66 mole % |
| other oxides | not more than 3 mole % |

A composition of the invention can have considerably improved durability, as measured in static fatigue tests, by comparison with the same composition from which one or more Al, Mg and Zn components have been omitted. Nevertheless, expansivity, glass transition temperature and refractive index can be little changed. It appears to be difficult to keep these changes so low if, say, Ca or Ba is substituted for Mg, or if Zr or Ti is substituted for Zn.

A composition of the invention comprises essentially six oxides. It is preferred that the composition comprises at least 49 mole % SiO$_2$ and no more than 1 mole % of oxides other than the specified six. The composition may nevertheless comprise, say, from 0.01 to 1% by weight of a redox buffering agent, e.g. Sb$_2$O$_3$ or, preferably, As$_2$O$_3$. The preferred amount of any redox buffering agent is from 0.05 to 0.2% by weight. The function of such agents is described in general terms in EP—A—0018110.

The B$_2$O$_3$ content of the composition of the invention is preferably between 15 and 20 mole %. The combined content of Al$_2$O$_3$, MgO and ZnO is preferably no more than 7 mole %. The three contents may be about the same.

A composition of the invention may be prepared in any suitable manner, e.g. by melting together the desired components. A melt which can be subsequently converted to a solid glass, for storage, is especially convenient.

For example, a melt may be prepared including a redox buffering agent, as described above, and a gaseous drying agent may then be passed through the melt. In general, melt and final glass compositions are practically the same, and any deviation can be allowed for after simple trial and error. Minor deviations may be observed, owing to the reduction of As$_2$O$_3$ to volatile As in the drying step.

The drying agent may be CO or a mixture of CO and CO$_2$, e.g. as described in GB—A—1507712. It is particularly preferred to use fluorine or a halocarbon, as described in EP—A—0103441. Oxygen may also be passed through the melt, in order to reduce the level of transition metal contaminants.

An optical fibre according to the invention comprises a cladding of a composition as defined herein and a core of a sodium borosilicate glass composition which preferably includes additional components selected from BaO, ZrO$_2$, GeO$_2$ and Al$_2$O$_3$. Particularly preferred core glass compositions are those defined in EP—A—0018109 and EP—A—0081928. More specifically, the core glass composition may comprise SiO$_2$, B$_2$O$_3$, Na$_2$O, one or more of CaO, SiO and BaO and up to 5 mole % of one or more other compatible oxides. Alternatively, the core glass composition may comprise Na$_2$O, B$_2$O$_3$, BaO, SiO$_2$ and ZrO$_2$. Further reference should be made to any of claims 3, 4, 11, 12 and 15 of EP—A—0018109 or any of claims 1—11 of EP—A—0081928. The loss may be less than 20 dB/km (at 850 nm).

Preferred fibres of the invention are made by the double-crucible process. Large core fibres of high numerical aperture can be made having a diameter of from 90—220 μm. The outer diameter of the cladding is normally at least 25 μm greater than the core diameter, and is suitably from 115—270 μm. Step-index fibres are preferred.

An Example illustrating the invention will now be given, together with compositions prepared for comparison.

Five glasses (Glass 5 illustrates the invention) were prepared, having the compositions shown in the following Table. All figures are in mole %.

TABLE

| Glass | SiO$_2$ | B$_2$O$_3$ | Na$_2$O | Al$_2$O$_3$ | MgO | ZnO |
|-------|---------|------------|---------|-------------|-----|-----|
| 1 | 62.5 | 17.5 | 20 | — | — | — |
| 2 | 61 | 17.5 | 20 | 1.5 | — | — |
| 3 | 61 | 15.5 | 20 | 1.5 | 2.0 | — |
| 4 | 60 | 17 | 18 | 2.5 | — | 2.5 |
| 5 | 60 | 15 | 18.5 | 2.0 | 2.0 | 2.5 |

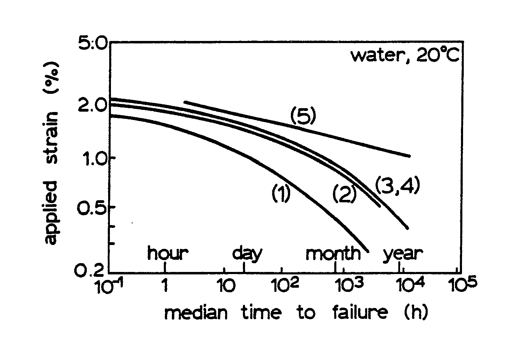

Multi-component step-index glass fibres were prepared, and static fatigue measurements were made by applying a constant strain to a coated fibre, by wrapping it around a circular mandrel, in water at 20°C. The results are shown in the accompanying drawing, where the arrow on the final data point for Glass 5 indicates that no failure had by then been observed.

## Claims

1. An oxide glass composition which consists of the following components:

| | |
|---|---|
| Na$_2$O | 17 to 21 mole % |
| B$_2$O$_3$ | 14 to 20 mole % |
| Al$_2$O$_3$ | 1 to 3 mole % |
| MgO | 1 to 3 mole % |
| ZnO | 1 to 3 mole % |
| SiO$_2$ | 47 to 66 mole % |
| other oxides | not more than 3 mole % |

2. A composition according to claim 1, which comprises at least 49 mole % SiO$_2$ and not more than 1 mole % of the said other oxides.

3. A composition according to claim 1 or claim 2, which comprises no more than 7 mole % of Al$_2$O$_3$, MgO and ZnO in combination.

4. An optical fibre comprising a core having a sodium borosilicate composition and a loss of less than 20 dB/km (at 850 nm), and a cladding of a composition according to any preceding claim.

5. A step-index fibre according to claim 4.

## Patentansprüche

1. Oxidglas-Zusammensetzung, bestehend aus den folgenden Komponenten:

| | |
|---|---|
| Na$_2$O | 17 bis 21 Mol % |
| B$_2$O$_3$ | 14 bis 20 Mol % |
| Al$_2$O$_3$ | 1 bis 3 Mol % |
| MgO | 1 bis 3 Mol % |
| ZnO | 1 bis 3 Mol % |
| SiO$_2$ | 47 bis 66 Mol % |
| andere Oxide | nicht mehr als 3 Mol % |

2. Zusammensetzung nach Anspruch 1 mit mindestens 49 Mol % SiO$_2$ und nicht mehr als 1 Mol % der anderen Oxide.

3. Zusammensetzung nach Anspruch 1 oder 2, mit nicht mehr als 7 Mol % Al$_2$O$_3$, MgO und ZnO in Kombination.

4. Lichtleitfaser mit einem Kern aus einer Natriumborosilikat-Zusammensetzung und einem Verlust von weniger als 20 dB/km (bei 850 nm), und einem Mantel aus einer Zusammensetzung nach einem der vorhergehenden Ansprüche.

5. Stufenindex-Lichtleitfaser nach Anspruch 4.

## Revendications

1. Une composition de verre d'oxydes comprenant les composants suivants:

| | |
|---|---|
| Na$_2$O | 17 à 21 mole% |
| B$_2$O$_3$ | 14 à 20 mole% |
| Al$_2$O$_3$ | 1 à 3 mole% |
| MgO | 1 à 3 mole% |
| ZnO | 1 à 3 mole% |
| SiO$_2$ | 47 à 66 mole% |
| Autres oxydes | au maximum 3 mole% |

2. Une composition selon la revendication 1 qui comprend au moins 49 mole% de SiO$_2$ et au maximum 1 mole% des autres oxydes.

3. Une composition selon la revendication 1 ou 2 qui comprend au maximum 7 mole% de Al$_2$O$_3$, MgO et ZnO au total.

4. Une fibre optique comprenant un coeur d'une composition de borosilicate de sodium donnant une perte inférieure à 20 dB/km à la longueur d'onde de 850 nm, avec une gaine d'une composition selon l'une quelconque des revendications précédentes.

5. Une fibre à saut d'indice de réfraction selon la revendication 4.